(19) Europäisches Patentamt
European Patent Office
Office européen des brevets

(11) **EP 2 205 699 B1**

(12) **FASCICULE DE BREVET EUROPEEN**

(45) Date de publication et mention
de la délivrance du brevet:
**05.09.2018 Bulletin 2018/36**

(21) Numéro de dépôt: **08871120.5**

(22) Date de dépôt: **17.10.2008**

(51) Int Cl.:
*B01J 23/96* (2006.01)     *B01J 38/44* (2006.01)

(86) Numéro de dépôt international:
**PCT/FR2008/001460**

(87) Numéro de publication internationale:
**WO 2009/090339 (23.07.2009 Gazette 2009/30)**

(54) **PROCÉDÉ ET ENCEINTE DE RÉGÉNÉRATION D'UN CATALYSEUR DE REFORMAGE**

VERFAHREN UND GEHÄUSE ZUR WIEDERHERSTELLUNG EINES WIEDERHERSTELLUNGSKATALYSATORS

METHOD AND HOUSING FOR REGENERATING A REFORMING CATALYST

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.10.2007 FR 0707607**

(43) Date de publication de la demande:
**14.07.2010 Bulletin 2010/28**

(73) Titulaire: **IFP Energies nouvelles
92500 Rueil-Malmaison (FR)**

(72) Inventeurs:
• DECOODT, Xavier
  F-93100 Montreuil (FR)
• DURAND, Sébastien
  F-78140 Véliz (FR)
• LE-GOFF, Pierre-Yves
  75011 Paris (FR)
• WERMESTER, Stéphane
  F-78400 Chatou (FR)

(56) Documents cités:
EP-A- 0 378 482     EP-A- 0 710 502
US-B1- 6 461 992

**Description**

L'invention concerne la régénération des catalyseurs de reformage et des catalyseurs de production d'hydrocarbures aromatiques.

D'une manière générale, ces catalyseurs sont utilisés pour la conversion d'hydrocarbures naphténiques ou paraffiniques, susceptibles de se transformer par déshydrocyclisation et/ou déshydrogénation, lors du reformage ou de la production d'hydrocarbures aromatiques (par exemple la production de benzène, toluène, ortho-, méta- ou paraxylènes). Ces hydrocarbures proviennent du fractionnement des pétroles bruts par distillation ou d'autres procédés de transformation.

Un des moyens pour augmenter les rendements de ces procédés de reformage ou de production d'aromatiques, est de diminuer les pressions opératoires auxquelles s'effectuent les différentes réactions intéressantes. Par exemple, il y a 30 ans les réactions de reformage s'effectuaient à 40 bars (avec 1 bar = 0,1MPa) Il y a 20 ans, à 15 bars. Aujourd'hui, il est courant de voir des réacteurs de reformage fonctionnant à des pressions inférieures à 10 bars, notamment comprises entre 3 et 8 bars.

Cependant, l'amélioration des réactions bénéfiques due à la baisse de pression s'accompagne d'une désactivation plus rapide du catalyseur par cokage. Le coke ou les précurseurs de coke sont des composés constitués essentiellement de carbone et d'hydrogène. Ils se déposent sur les sites actifs du catalyseur. Le rapport molaire H/C du coke formé et de ses précurseurs varie généralement entre 0,3 à 1,0. Les atomes de carbone et d'hydrogène forment généralement des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke et précurseurs de coke accumulés sur le catalyseur peuvent devenir importantes. Pour les unités à lit fixe, ces teneurs sont généralement comprises entre 2,0 et 35,0 % poids. Pour les unités à lit circulant, ces teneurs sont généralement inférieures à 10,0 % poids.

Le dépôt de coke, plus rapide à basse pression, nécessite une régénération également plus rapide du catalyseur. Les cycles de régénération actuels peuvent descendre jusqu'à 2 ou 3 jours.

Art antérieur

Les brevets EP0378482, EP0872276B et EP0872277B traitent de la régénération des catalyseurs de reformage. Il s'agit de procédés de régénération d'un catalyseur de reformage comprenant des étapes successives de combustion, d'oxychloration et de calcination.

Le procédé selon la présente invention comporte au moins deux lits de combustion A1 et A2 et se différencie notamment des procédés décrient dans ces deux brevets EP0872276B et EP0872277B par un recyclage d'une partie de l'effluent de la zone d'oxychloration via une soufflante (blower selon la terminologie anglo-saxonne) vers le dernier lit A2 de combustion.

Résumé de l'invention

L'invention concerne un procédé de régénération d'un catalyseur de production d'hydrocarbures aromatiques ou de reformage selon la revendication 1 comprenant une étape de combustion dans une zone A comprenant au moins 2 lits A1 et A2, une étape d'oxychloration dans une zone B, une étape de calcination dans une zone C. Le gaz effluent de la zone d'oxychloration est recyclé en partie via au moins une section D de lavage vers l'entrée des lits A1 et A2. De plus, le gaz effluent de la zone B est recyclé en partie vers le lit de combustion A2 en passant par une soufflante mais sans passer par ladite section D de lavage, et en partie vers l'entrée de la zone B en passant par ladite soufflante mais sans passer par ladite section de lavage. L'invention concerne aussi le dispositif selon la revendication 13 dans lequel a lieu ce procédé.

Description détaillée de l'invention

Le catalyseur à régénérer comprend généralement un support, ledit support comprenant au moins un oxyde réfractaire et/ou une ou plusieurs zéolites. Il comprend au moins un métal noble, de préférence le platine et au moins un halogène. Il comprend éventuellement un ou plusieurs éléments additionnels sélectionnés dans le groupe constitué par les éléments du groupe IA, IIA, les lanthanides, les éléments du groupe IV A de préférence le silicium et/ou l'étain, les éléments du groupe IIIB, les éléments du groupe III A, de préférence l'indium, les éléments du groupe VA, de préférence le phosphore et les éléments du groupe VIIB, de préférence le rhénium (les numéros des groupes correspondent à la classification CAS dans CRC Handbook of Chemistry and Physics, éditeur, CRC press, rédacteur en chef D.R. Lide , 81ème édition, 2000-2001).

Selon un mode préféré, le catalyseur comprend au moins du platine, du chlore et un support alumine.

Compte tenu du coût élevé du platine, il est important de disperser au mieux la phase métallique, c'est-à-dire d'augmenter la proportion de platine en contact avec la surface et les molécules à transformer. La surface métallique spécifique (surface exprimée par gramme de métal) doit être maximale afin d'obtenir le taux de conversion le plus élevé possible. Ainsi, une chute de l'accessibilité, équivalent à une augmentation de la taille des particules ou un regroupement des particules élémentaires, est fortement préjudiciable à la productivité de la réaction.

L'objectif est donc de minimiser la taille des particules au cours de la préparation et de maintenir cet état de dispersion élevé. La présence de chlore en quantité suffisante constitue une réponse à ce problème.

Les inventeurs ont ainsi mis en évidence que les recyclages d'une partie de l'effluent de la zone d'oxychloration via une soufflante (blower selon la terminologie anglo-saxonne) en partie vers le dernier lit de combustion A2 et en partie vers l'entrée de la zone B d'oxychloration apportent de l'agent chlorant, en particulier sur le lit A2. Cet apport diminue ainsi l'élution du chlore et réduit la consommation en agent chlorant. De plus, ces recyclages permettent de réduire le frittage du platine et favorisent par conséquent sa redispersion efficace lors de l'étape B d'oxychloration.

Cette amélioration de la redispersion est d'autant plus sensible que le catalyseur contient des teneurs croissantes en poison tel que le fer.

La zone A de combustion comprend au moins 2 lits de combustion A1 et A2, de préférence 2 lits A1 et A2. Lesdits lits sont de préférence mobiles et radiaux.

La zone B d'oxychloration comprend au moins un lit. Ces lits sont généralement mobiles. De préférence, lesdits lits sont aussi axiaux.

La zone C de calcination comprend au moins un lit. Ces lits sont généralement mobiles. De préférence, lesdits lits sont aussi axiaux.

Le lit de combustion A1

Dans le lit A1, le catalyseur est généralement traité sous une pression de 3 à 8 bars et à une température comprise entre 350 et 550°C par un gaz de combustion comprenant 0,01 à 1,3 % d'oxygène en volume et circulant à co-courant du catalyseur. Le gaz dans le lit A1 provient généralement du mélange d'une partie du gaz issu de la zone B d'oxychloration avec une partie du gaz issue du lit A2.

Deuxième lit de combustion A2

Dans le lit A2, le catalyseur est généralement traité sous une pression de 3 à 8 bars. Cette pression est en général sensiblement égale à celle qui règne dans le lit A1.

La température dans le lit A2 est généralement supérieure d'au moins 20°C à la température qui règne dans le lit A1.

La combustion dans le lit A2 a généralement lieu en présence du gaz ayant circulé à travers le lit A1 et en présence d'une partie de l'effluent provenant de la sortie de la zone d'oxychloration B. De plus, un gaz inerte d'appoint préférentiellement de l'azote, peut éventuellement être ajouté dans le lit A2. Par ailleurs, un air sec d'appoint peut éventuellement être ajouté dans le lit A2.

L'objectif est que le catalyseur soit au contact d'un gaz comprenant entre 0,01 à 1,3 % volume d'oxygène, ces gaz circulant à co-courant du catalyseur.

Zone d'oxychloration B

Dans la zone d'oxychloration B le catalyseur est généralement traité à contre-courant par un mélange d'un gaz comprenant de l'oxygène qui provient:

- en partie de la zone de calcination
- en partie du recyclage via une soufflante de l'effluent gazeux de la zone d'oxychloration
- éventuellement en partie d'un appoint d'oxygène, de préférence sous forme d'air
- éventuellement en partie d'une fraction du gaz issue de la section de lavage et de la section éventuelle de séchage.

En outre, ce mélange de gaz alimentant la zone d'oxychloration comprend généralement un appoint en au moins un agent chlorant. De plus, ce mélange de gaz alimentant la zone d'oxychloration comprend généralement un appoint d'eau ou de précurseur d'eau.

Une partie du gaz issu de l'oxychloration est, via une soufflante, recirculé vers le lit A2.

Le ou les agents chlorant sont généralement sélectionnés dans le groupe constitué par le chlore, le chlorure d'hydrogène les hydrocarbures halogénés comprenant moins de 4 atomes de carbone et de 1 à 6 atomes de chlore.

Par exemple, il peut s'agir de $C_2Cl_4$, $CCl_4$ ou de tout agent chlorant connu dans ces procédés de régénération pour libérer du chlore. Ils sont introduits de préférence en mélange avec le gaz comprenant de l'oxygène.

Lorsque la zone d'oxychloration est composée de lits mobiles et axiaux, on l'introduit généralement dans la partie inférieure de la zone d'oxychloration pour qu'il s'écoule à contre-courant du catalyseur.

L'eau est généralement amenée sous forme liquide ou vapeur, de préférence sous forme vapeur. L'eau ou le précurseur d'eau peut généralement être amenée dans la zone d'oxychloration en mélange avec le gaz comprenant de l'oxygène.

Le rapport molaire $H_2O/HCl$ dans la zone B est généralement compris entre 1 et 50, de préférence entre 1 et 40, et de manière très préférée entre 1 et 30.

L'étape d'oxychloration se déroule en présence d'un gaz comprenant généralement moins de 40%, de préférence moins de 30%, de manière préférée moins de 21 % volume d'oxygène, de manière très préférée entre 4% et 21 % volume d'oxygène, de manière encore plus préférée entre 10% et 21% volume d'oxygène et généralement au moins 50 ppm poids de chlore, à une température comprise généralement entre 350 et 600°C, de préférence entre 350 et 550°C, de manière plus préférée entre 450 et 550°C, de manière très préférée entre 490 et 550°C.

La pression dans cette zone est généralement de 3 à 8 bars pour les procédés en lit mobile, en particulier pour les procédés de reformage à faible pression. Le temps de séjour du catalyseur dans l'étape d'oxychloration est généralement inférieur à 3 heures, de préférence compris entre 30 minutes et 3 heures.

Dans une réalisation préférée des procédés en lit mobile, il est introduit dans la zone d'oxychloration, au moins un appoint en oxygène.

Dans une autre réalisation préférée des procédés en lit mobile, uniquement un agent chlorant et un précurseur d'eau sont introduits dans la zone d'oxychloration. L'oxygène présent dans la zone d'oxychloration provient alors du gaz provenant de la zone de calcination et du recyclage de l'effluent de la zone d'oxychloration vers l'entrée de ladite zone d'oxychloration.

Dans un autre mode préféré de réalisation des procédés en lit mobile, le gaz alimentant la zone d'oxychloration résulte du mélange du gaz provenant de la zone de calcination, avec l'appoint du ou des agent(s) chlorant(s), avec l'appoint d'eau ou des précurseurs d'eau et avec le ou les gaz comprenant de l'oxygène introduits dans la zone d'oxychloration. Le ou les gaz comprenant de l'oxygène peuvent être une partie des gaz issus du dernier lit de combustion lavés, de préférence séchés et additionnés d'un appoint en oxygène ainsi que le gaz de recirculation d'une partie de l'effluent de la zone d'oxychloration via une soufflante vers la zone d'oxychloration.

Zone de calcination C

L'étape de calcination est réalisée dans la zone C dans laquelle le catalyseur est traité pendant 20 à 160 minutes à une température comprise entre 350 et 600°C sous une pression comprise entre 3 et 8 bars, par un appoint d'air sec mélangé éventuellement avec une partie des gaz en provenance de la section de lavage et de la zone éventuel de séchage. Le gaz d'alimentation de la zone de calcination ne comprend généralement pas plus de 1 % volume d'eau, de préférence pas plus de 0,1 % volume d'eau. Généralement, il comprend au plus 21 % volume d'oxygène.

Il circule généralement à contre-courant du catalyseur dans le cas des procédés à lit mobile avec zone de calcination axiale.

Selon une variante, le seul appoint en gaz comprenant de l'oxygène est réalisé en entrée de la zone de calcination.

Section D de lavage et section E de séchage

L'effluent gazeux du lit A2 est généralement envoyé, en mélange avec une partie des effluents gazeux de la zone B d'oxychloration, vers la section D de lavage. Une partie de l'effluent de cette section de lavage est purgée et l'autre partie est généralement envoyée vers une section de séchage E puis est généralement envoyée vers un compresseur. L'effluent du compresseur est généralement envoyé en partie vers les lits A1 et A2 de combustion et éventuellement en partie vers les zones d'oxychloration et de calcination.

Selon un mode préféré, le catalyseur est en lit mobile dans chacune des zones A, B et C. Dans ce mode préféré, le gaz dans la zone d'oxychloration résulte du mélange du gaz provenant de la zone C de calcination avec :

- au moins un agent chlorant
- de l'eau ou des précurseurs d'eau
- un appoint en oxygène
- une partie des gaz issus du dernier lit de combustion A2, ces gaz issus du dernier lit de combustion étant au moins lavée dans la section D de lavage, au moins séchée dans une section E de séchage, au moins comprimé dans un compresseur
- le gaz de recirculation d'une partie de l'effluent de la zone d'oxychloration via la soufflante vers ladite zone d'oxychloration.

Selon un mode préféré, le gaz dans la zone de calcination provient d'un appoint d'air sec en mélange avec une partie des gaz préalablement lavés, séchés et comprimés qui sont issus du lit de combustion A2. Les seuls appoints en oxygène, de préférence sous forme d'air, sont généralement en entrée du dernier lit A2 de combustion, en entrée de la zone d'oxychloration et en entrée de la zone de calcination, de préférence les seuls appoints en oxygène sont en entrée des zone de calcination et d'oxychloration, de manière très préférée un seul appoint en oxygène est effectué en entrée de la zone de calcination. Le gaz effluent de la zone d'oxychloration est recyclé en partie via au moins la section D de lavage, la section E de séchage et le compresseur vers l'entrée des lits de combustion A1 et A2. De plus, le gaz effluent de la zone d'oxychloration est recyclé en partie vers le lit de combustion A2 et vers l'entrée de la zone d'oxychloration, ce recyclage étant effectué via une soufflante et sans passer par les sections de séchage, lavage et par le compresseur.

L'invention concerne aussi un dispositif pour mettre en oeuvre le procédé. Le dispositif comporte une enceinte comportant une zone de combustion A comprenant 2 lits de combustion (A1) et (A2) en série, au moins une zone d'oxychloration (B) comprenant au moins 1 lit d'oxychloration et au moins une zone de calcination (C) comprenant un lit de calcination. Le dispositif comporte des moyens pour la circulation du catalyseur successivement à travers les n lits de combustion, la zone d'oxychloration et la zone de calcination. Le dispositif comprend un point de prélèvement d'une partie du gaz de la zone d'oxychloration, ledit moyen de prélèvement étant relié à une soufflante, ladite soufflante étant reliée en aval à d'une part au moins une première ligne de recyclage d'une partie des gaz vers le dernier lit A2 de combustion et au moins une deuxième ligne de recyclage d'une autre partie des gaz vers un point d'introduction de gaz dans la zone d'oxychloration. Ce point d'introduction est situé en dessous du point de prélèvement de la zone d'oxychloration, cette deuxième ligne de recyclage comprenant au moins un point d'introduction d'eau ou de précurseurs d'eau, au moins un four et au moins un point d'introduction d'agents chlorant. La deuxième ligne de recyclage comprend en amont de la soufflante un point de prélèvement de gaz afin de recirculer une partie des gaz via une section D de lavage, l'effluent de la section de lavage étant en partie purgé puis, de préférence envoyé vers une section E de séchage, puis un compresseur, les gaz effluents du compresseur étant en partie recyclé au moins vers les lits de combustion A1 et A2. Le dispositif comprend un moyen de prélèvement d'une partie du gaz en un premier point du dernier lit de combustion A2, ledit moyen de prélèvement étant au moins relié à la section de lavage. Le dispositif comprend une plaque ou tout autre moyen pour séparer la zone de combustion et la zone d'oxychloration afin d'éviter le mélange des gaz issus de la combustion et les gaz issus de l'oxychloration.

Afin d'éviter le mélange des gaz issus de la combustion et les gaz issus de l'oxychloration, il est généralement disposé une plaque ou tout autre moyen pour séparer les zones de combustion et d'oxychloration. Par contre, les gaz issus de la calcination peuvent généralement passer librement dans la zone d'oxychloration.

Selon une variante, la deuxième ligne de recyclage comprend en amont de la soufflante un point de prélèvement de gaz afin de recirculer une partie des gaz via une section D de lavage, l'effluent de la section de lavage étant en partie purgé avant de circuler, via une section E de séchage, puis via un compresseur, les gaz effluents du compresseur étant en partie recyclés au moins vers les lits de combustion A1 et A2 et en partie vers la zone d'oxychloration et vers la zone de calcination.

Description des figures

La figure 1 représente un mode de réalisation de l'invention.
La figure 2 illustre l'impact de l'injection de chlore sur le frittage du platine en fonction du temps.

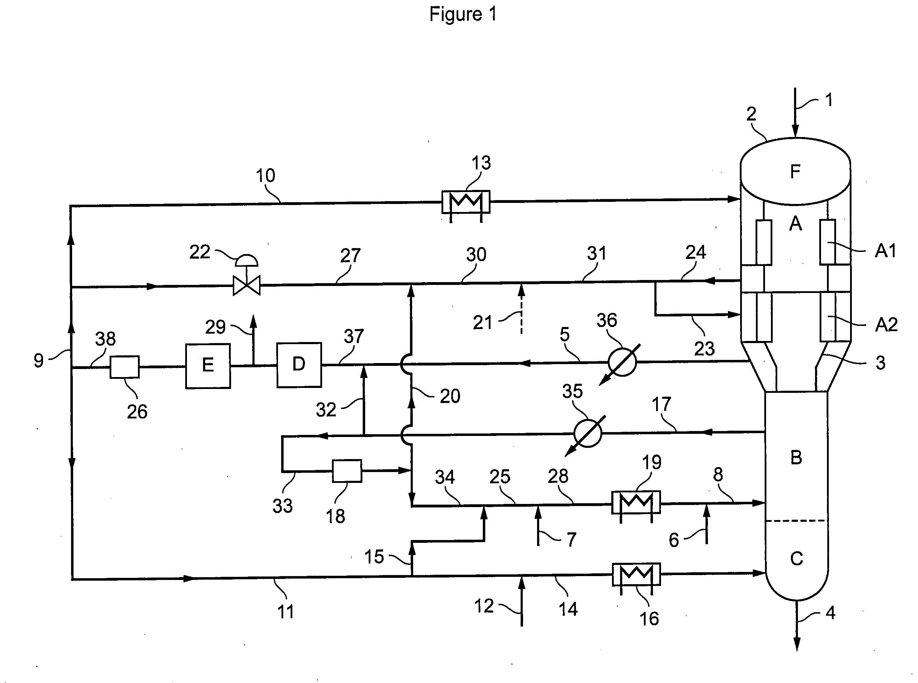

En ce qui concerne la figure 1, l'enceinte (2) comporte une zone A de combustion, une zone B d'oxychloration et une zone C de calcination. La zone de combustion A comporte deux lits de combustion A1 et A2.

Le catalyseur est introduit via la ligne 1 en tête de l'enceinte F et descend ensuite par gravité dans le lit de combustion A1 puis A2 puis via la ligne 3 du lit A2 vers la zone B d'oxychloration puis vers la zone C de calcination puis ressort de l'enceinte via la ligne 4.

Le lit A1 comporte une entrée de gaz circulant via la ligne 10, et une sortie de gaz circulant via la ligne 24.

Le lit A2 comporte une entrée de gaz circulant via la ligne 23, et une sortie de gaz circulant via la ligne 5 puis via le refroidisseur 36.

La zone B comporte une entrée de gaz circulant via la ligne 8, et une sortie de gaz circulant via la ligne 17. De plus, un appoint d'agent chlorant circule via la ligne 6 en mélange avec le gaz circulant via la ligne 28 pour alimenter la zone d'oxychloration via la ligne 8. De plus, un appoint d'eau ou d'un précurseur d'eau circule via la ligne 7 et en mélange avec le gaz circulant via la ligne 25 circule via la ligne 28 puis par un four 19 pour être introduit en oxychloration via la ligne 8 en mélange avec l'appoint d'agent chlorant circulant via la ligne 6.

La zone C comporte une entrée de gaz circulant via la ligne 14.

Les différentes recirculations de gaz sont décrites à présents:

Recirculation 1

Une partie du gaz effluent de la zone B d'oxychloration circule via la ligne 17 puis est refroidie par le refroidisseur 35 puis circule via la ligne 33, puis par une soufflante 18, puis par la ligne 20 puis par la ligne 30 puis par la ligne 31 puis par la ligne 23.

Recirculation 2

Une partie du gaz effluent de la zone B d'oxychloration circule via la ligne 17 est refroidie par le refroidisseur 35 puis circule via la ligne 32 pour être mélangée avec le gaz issue du lit de combustion A2 qui circule via la ligne 5. Ce mélange passe par la section de lavage D via la ligne 37 puis est en partie purgé via la ligne 29 et pour l'autre partie envoyée à la section de séchage E puis au compresseur 26. L'effluent de la section de séchage E circule via la ligne 38 puis en partie via la ligne 9 puis en partie via la ligne 27 puis par une vanne 22 puis est envoyé au lit A2 via la ligne 30 puis la ligne 31 puis la ligne 23. L'autre partie du mélange de gaz circulant via la ligne 9 est envoyée via la ligne 10 à un four 13 puis est injectée au premier lit de combustion A1.

Recirculation 3

Le gaz effluent de A1 transit via la ligne 24 et est mélangé au gaz transitant via la ligne 31 pour alimenter le deuxième lit de combustion via la ligne 23. Le gaz circulant via la ligne 31 correspond au mélange du gaz circulant via la ligne 30 avec l'éventuel appoint 21 de gaz comprenant de l'oxygène.

Recirculation 4

Un appoint d'agent chlorant est injecté via la ligne 6 et est mélangé au gaz provenant de la ligne 28 pour être injecté via la ligne 8 à la zone d'oxychloration.

Recirculation 5

Le gaz circulant via la ligne 38 est recyclé en partie via la ligne 9 vers les lits de combustion A1 et A2 et en partie via la ligne 11 vers la zone de calcination et vers la zone d'oxychloration.

Une partie du gaz circulant via la ligne 11 est envoyée dans la zone B via la ligne 15 puis 25 puis 28 puis 8. Une autre partie peut être mélangée à l'appoint d'air sec circulant via la ligne 12, passée par le four 16 et être envoyée en calcination via la ligne 14.

Recirculation 6

Une partie du gaz en sortie d'oxychloration est recirculée à l'entrée de la zone d'oxychloration via la ligne 17 puis via le refroidisseur 35 puis via la ligne 33 puis via la soufflante 18, puis via les lignes 34 puis 25 puis 28 puis via le four 19 puis via la ligne 8.

Exemples

Exemple 1

Le schéma de la figure 1 correspond au schéma selon l'invention utilisé pour la simulation réalisée avec le logiciel Pro II.

La température des gaz injectée en entrée de la zone de calcination et en entrée de la zone d'oxychloration est de 510°C pour le schéma de base et le schéma selon l'invention.

Les débits des mélanges de gaz circulant via les différentes lignes sont indiqués dans le tableau 1.

Le schéma de base illustre le cas où ni la recirculation via la soufflante de l'effluent de la zone d'oxychloration vers l'entrée du deuxième lit de combustion, ni la recirculation de l'effluent de la zone d'oxychloration vers l'entrée de la zone d'oxychloration ne sont effectuées (Voir le débit nul des gaz circulant via la ligne 20, 33 et 34). Le schéma selon l'invention illustre le cas où ces deux recyclages sont réalisés.

Tableau 1: débits des gaz circulant via les différentes lignes

| Zone concernée | Lignes | schéma de base: débit des gaz (en kg/h) | schéma selon l'invention: débit des gaz (en kg/h) |
|---|---|---|---|
| 1er lit de combustion | Ligne 10 | 23 629 | 23 629 |
| 2ème lit de combustion | Ligne 23 | 27 452 | 28 030 |
| | Ligne 27 | 2 943 | 3 521 |
| | Ligne 21 | 880 | 0 |
| | Ligne 20 | 0 | 880 |
| Zone de calcination | Ligne 14 | 1 180 | 1 349 |
| | Ligne 12 | 469 | 1 349 |
| Gaz introduit en zone d'oxychloration | Ligne 8 | 1 180 | 1 180 |
| | Ligne 34 | 0 | 1 180 |
| | Ligne 6 | 5,1 | 3,8 |
| | Ligne 7 | 9 | 5 |
| Effluent de la zone d'oxychloration | Ligne 17 | 2374 | 2538 |
| Soufflante | Ligne 33 | 0 | 2 060 |

Dans le cas du schéma selon l'invention, 90 ppm volume d'HCI sont en sortie du second lit de combustion contre 78 ppm volume d'HCI pour le schéma de base.

Exemple 2

Des tests ont été réalisés dans un réacteur à lit fixe afin de caractériser l'influence de la présence de chlore dans le second lit de combustion. Ce test est en effet représentatif des conditions enregistrées dans le deuxième lit de combustion.

Pour cela, un catalyseur platine sur un support alumine chlorée dont la teneur en chlore initiale est de 1,1 % poids est testé sous atmosphère air avec 10.000 ppm d'eau, un débit de 2000 Nl/kg/h et à une température de 650°C. Le test est réalisé sur une durée de 60 heures.

Le chlore est injecté dans le réacteur afin d'avoir une teneur stable en chlore tout au long du test de 1,1 % poids (+/- 0,2% poids).

Compte tenu du coût élevé du platine, il est important de disperser au mieux la phase métallique, c'est-à-dire d'augmenter la proportion de platine en contact avec la surface et les molécules à transformer. La surface métallique spécifique (surface exprimée par gramme de métal) doit être maximale afin d'obtenir le taux de conversion le plus élevé possible. Ainsi, une chute de l'accessibilité, équivalent à une augmentation de la taille des particules ou un regroupement des particules élémentaires, est fortement préjudiciable à la productivité de la réaction. L'objectif est donc de minimiser la taille des particules au cours de la préparation et de maintenir cet état de dispersion élevé. La présence de chlore en quantité suffisante peut constituer une réponse à ce problème.

L'accessibilité au sens de la présente invention est la quantité de platine accessible à la charge à convertir par rapport à la quantité totale de platine présente sur le catalyseur. La diminution de l'accessibilité correspond à un frittage du platine.

La mesure de l'accessibilité du platine est effectuée par titrage $H_2 O_2$.

Le titrage $H_2/O_2$ consiste à mesurer le volume d'oxygène consommé par la réaction (1) après une étape de réduction sous hydrogène du catalyseur.

$$Pt_s\text{-}H + \tfrac{3}{4} O_2 \rightarrow Pt_s\text{-}O + \tfrac{1}{2} H_2O \qquad (1)$$

ou $Pt_s$ désigne les atomes superficiels de platine.

Le catalyseur est réduit sous hydrogène à 450°C puis, après une redescente sous hydrogène à température ambiante, des volumes connus d'oxygène sont injectés. La consommation oxygène est suivie par chromatographie, l'intégration des signaux permettant par différence avec le volume total injecté de connaître le volume oxygène consommé par la réaction (1). A l'aide des coefficients stoechiométriques de la réaction (1), la fraction de platine en surface ou accessibilité est déterminée par la relation:

$$D = \frac{4VO_2.M_{Pt}}{3V_M.[\%Pt]}$$

avec:

- $M_{Pt}$: masse molaire du platine (195,09 g.mol$^{-1}$)
- $V_M$: volume molaire du gaz (24400 ml/mol) a 25°C
- $VO_2$: volume mesuré correspondant à la consommation oxygène
- % Pt: teneur pondérale en platine du catalyseur

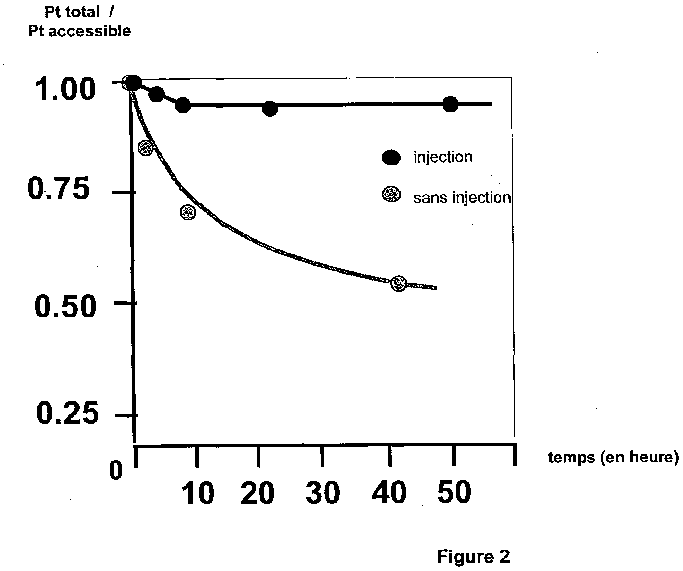

La figure 2 montre une accessibilité moindre au cours du temps donc un frittage plus important du platine sans injection de chlore.

La recirculation de l'effluent d'oxychloration en entrée du deuxième lit de combustion permet un apport de chlore et favorise ainsi le non-frittage du platine.

Ces résultats illustrent l'avantage des recyclages d'une partie de l'effluent de la zone d'oxychloration via une soufflante en partie vers le lit de combustion A2 et en partie vers l'entrée de la zone d'oxychloration. Ils apportent de l'agent chlorant sur le lit de combustion A2, diminuant ainsi l'élution du chlore. Ils permettent aussi de réduire de façon significative le frittage du platine et favorisent par conséquent sa redispersion efficace lors de l'étape d'oxychloration.

**Revendications**

1. Procédé de régénération d'un catalyseur de production d'hydrocarbures aromatiques ou de reformage comprenant les étapes suivantes:

    - une étape a) de combustion dans une zone A de combustion comprenant au moins deux lits de combustion A1 et A2 en série,
    - une étape b) d'oxychloration dans une zone d'oxychloration B comprenant au moins un lit d'oxychloration, ladite zone d'oxychloration B étant alimentée au moins par un agent chlorant, au moins par de l'eau ou des précurseurs d'eau et au moins par un gaz comprenant de l'oxygène, les zones de combustion et d'oxychloration étant séparées de manière à éviter le mélange des gaz issus de la combustion et les gaz issus de l'oxychloration,
    - une étape c) de calcination dans une zone de calcination C comprenant au moins un lit de calcination, alimentée par un gaz comprenant au moins un appoint d'air sec,

    dans lequel:

    - ledit catalyseur comprend un support, du chlore et au moins un métal noble et circule en série dans les lits A1 puis A2, puis dans la zone d'oxychloration B puis dans la zone de calcination C
    - le gaz effluent du lit A1 est envoyé vers le lit A2,
    - le gaz alimentant la zone de calcination C circule librement vers la zone d'oxychloration B
    - un appoint en gaz comprenant de l'oxygène est au moins réalisé en entrée de la zone de calcination,
    - le gaz effluent de la zone d'oxychloration est recyclé en partie via au moins une section D de lavage vers l'entrée des lits de combustion A1 et A2,
    - le gaz effluent de la zone d'oxychloration est recyclé, en passant par une soufflante sans passer par ladite section D de lavage, en partie au moins vers le lit de combustion A2 et en partie au moins vers l'entrée de la zone d'oxychloration B
    - le gaz effluent du lit de combustion A2 est recyclé en partie via au moins ladite section D de lavage vers l'entrée des lits A1 et A2.

2. Procédé selon la revendication 1 dans lequel dans la zone B d'oxychloration la température est comprise entre 350 et 600°C et le temps de séjour du catalyseur est compris entre 30 minutes et 3 heures.

3. Procédé selon la revendication 2 dans lequel dans la zone B d'oxychloration, la teneur en oxygène du gaz au contact du catalyseur est comprise entre 4 et 21 % volume.

4.  Procédé selon la revendication 3 dans lequel dans la zone C de calcination, le gaz comprend au plus 21 % volume d'oxygène et au plus 1 % volume d'eau.

5.  Procédé selon l'une des revendications précédentes dans lequel le seul appoint en gaz comprenant de l'oxygène est réalisé en entrée de la zone de calcination.

6.  Procédé selon l'une des revendications précédentes dans lequel l'agent chlorant est du chlore.

7.  Procédé selon l'une des revendications 1 à 6 dans lequel le catalyseur est en lit mobile dans chacune des zones A, B et C.

8.  Procédé selon la revendication 7 dans lequel le gaz dans la zone d'oxychloration résulte du mélange:

    - du gaz provenant de la zone C de calcination
    - avec au moins un agent chlorant
    - avec de l'eau ou des précurseurs d'eau
    - avec un appoint en oxygène
    - avec une partie du gaz effluent de A2 qui est au moins lavée dans la section D de lavage, au moins séchée dans une section E de séchage, au moins comprimée dans un compresseur
    - avec la partie de l'effluent de la zone d'oxychloration recyclée via la soufflante vers ladite zone d'oxychloration.

9.  Procédé selon la revendication 8 dans lequel le gaz dans la zone de calcination provient du mélange:

    - d'un appoint d'air sec
    - avec une partie du gaz effluent du lit de combustion A2 qui est au moins lavée dans la section D de lavage, au moins séchée dans la section E de séchage, au moins comprimée dans ledit compresseur.

10. Procédé selon l'une des revendications 8 ou 9 dans lequel le gaz effluent de la zone d'oxychloration est recyclé en partie via au moins la section D de lavage, la section E de séchage et le compresseur vers l'entrée des lits de combustion A1 et A2 et dans lequel le gaz effluent de la zone d'oxychloration est recyclé en partie vers le lit de combustion A2 et vers l'entrée de la zone d'oxychloration, ce recyclage étant effectué via une soufflante sans passer par ladite section de séchage, par ladite section de lavage et par ledit compresseur.

11. Procédé selon la revendication 10 dans lequel les seuls appoints en oxygène sont:

    - en entrée du lit A2
    - en entrée de la zone d'oxychloration
    - en entrée de la zone de calcination.

12. Procédé selon la revendication 10 dans lequel l'unique appoint en oxygène provient d'un appoint en air sec dans la zone de calcination.

13. Dispositif pour mettre en oeuvre le procédé selon l'une des revendications 1 à 12, comportant une enceinte comportant une zone de combustion A comprenant 2 lits de combustion (A1) et (A2) en série, au moins une zone d'oxychloration (B) comprenant au moins 1 lit d'oxychloration et au moins une zone de calcination (C) comprenant un lit de calcination, ledit dispositif comportant des moyens pour la circulation du catalyseur successivement à travers les 2 lits de combustion, la zone d'oxychloration et la zone de calcination, ledit dispositif comprenant un point de prélèvement d'une partie du gaz de la zone d'oxychloration, ledit moyen de prélèvement étant relié à une soufflante, ladite soufflante étant reliée en aval à d'une part au moins une première ligne de recyclage d'une partie des gaz vers le dernier lit A2 de combustion et au moins une deuxième ligne de recyclage d'une autre partie des gaz vers un point d'introduction de gaz dans la zone d'oxychloration, ce point d'introduction étant situé en dessous du point de prélèvement de la zone d'oxychloration, cette deuxième ligne de recyclage comprenant au moins un point d'introduction d'eau ou de précurseurs d'eau, au moins un four et au moins un point d'introduction d'agents chlorant,
    ladite deuxième ligne de recyclage comprenant en amont de la soufflante un point de prélèvement de gaz afin de recirculer une partie des gaz via une section D de lavage, l'effluent de la section de lavage étant en partie purgé avant de circuler via un compresseur, les gaz effluents du compresseur étant en partie recyclés au moins vers les lits de combustion A1 et A2,

ledit dispositif comprenant un moyen de prélèvement d'une partie du gaz en un premier point du dernier lit de combustion A2, ledit moyen de prélèvement étant au moins relié à la section de lavage,

ledit dispositif comprenant une plaque ou tout autre moyen pour séparer la zone de combustion et la zone d'oxychloration afin d'éviter le mélange des gaz issus de la combustion et les gaz issus de l'oxychloration.

**14.** Dispositif selon la revendication 13 dans lequel ladite deuxième ligne de recyclage comprenant en amont de la soufflante un point de prélèvement de gaz afin de recirculer une partie des gaz via une section D de lavage, l'effluent de la section de lavage étant en partie purgé avant de circuler, via une section E de séchage, puis via un compresseur, les gaz effluents du compresseur étant en partie recyclés au moins vers les lits de combustion A1 et A2 et en partie vers la zone d'oxychloration et vers la zone de calcination.

**Patentansprüche**

**1.** Verfahren zur Regeneration eines Katalysators zur Herstellung von aromatischen Kohlenwasserstoffen oder zur Reformierung, umfassend die folgenden Schritte:

- einen Verbrennungsschritt a) in einer Verbrennungszone A, umfassend mindestens zwei Brennbetten A1 und A2 in Serie,
- einen Oxychlorierungsschritt b) in einer Oxychlorierungszone B, umfassend mindestens ein Oxychlorierungsbett, wobei die Oxychlorierungszone B mindestens mit einem Chlorierungsmittel, mindestens mit Wasser oder Wasservorläufern und mindestens mit einem Sauerstoff umfassenden Gas gespeist wird, wobei die Verbrennungs- und Oxychlorierungszonen getrennt sind, um das Vermischen der aus der Verbrennung stammenden Gase und der aus der Oxychlorierung stammenden Gase zu vermeiden,
- einen Kalzinierungsschritt c) in einer Kalzinierungszone C, umfassend mindestens ein Kalzinierungsbett, das mit einem Gas, umfassend mindestens einen Trockenluftzusatz, gespeist wird,

wobei:

- der Katalysator einen Träger, Chlor und mindestens ein Edelmetall umfasst und in Serie in den Betten A1 dann A2, dann in der Oxychlorierungszone B, dann in der Kalzinierungszone C zirkuliert,
- das aus dem Bett A1 ausströmende Gas zum Bett A2 geschickt wird,
- das die Kalzinierungszone C speisende Gas frei zu der Oxychlorierungszone B zirkuliert,
- ein Gaszusatz, umfassend Sauerstoff, zumindest am Eingang der Kalzinierungszone erfolgt,
- das aus der Oxychlorierungszone ausströmende Gas teilweise über mindestens einen Waschabschnitt D zum Eingang der Brennbetten A1 und A2 rückgeführt wird,
- das aus der Oxychlorierungszone ausströmende Gas, wobei es durch ein Gebläse strömt, ohne den Waschabschnitt D zu passieren, zumindest teilweise zu dem Brennbett A2 und zumindest teilweise zu dem Eingang der Oxychlorierungszone B rückgeführt wird,
- das aus dem Brennbett A2 ausströmende Gas teilweise zumindest über den Waschabschnitt D zum Eingang der Betten A1 und A2 rückgeführt wird.

**2.** Verfahren nach Anspruch 1, bei dem in der Oxychlorierungszone B die Temperatur zwischen 350 und 600 °C und die Aufenthaltszeit des Katalysators zwischen 30 Minuten und 3 Stunden liegt.

**3.** Verfahren nach Anspruch 2, bei dem in der Oxychlorierungszone B der Sauerstoffgehalt des Gases in Kontakt mit dem Katalysator zwischen 4 und 21 Vol.-% liegt.

**4.** Verfahren nach Anspruch 3, bei dem in der Kalzinierungszone C das Gas höchstens 21 Vol.-% Sauerstoff und höchstens 1 Vol.-% Wasser umfasst.

**5.** Verfahren nach einem der vorhergehenden Ansprüche, bei dem der einzige Gaszusatz, umfassend Sauerstoff, am Eingang der Kalzinierungszone hergestellt ist.

**6.** Verfahren nach einem der vorhergehenden Ansprüche, bei dem das Chlorierungsmittel Chlor ist.

7. Verfahren nach einem der Ansprüche 1 bis 6, bei dem der Katalysator in jeder der Zonen A, B und C im mobilen Bett ist.

8. Verfahren nach Anspruch 7, bei dem das Gas in der Oxychlorierungszone aus folgender Mischung stammt:

- Gas, das aus der Kalzinierungszone stammt,
- mit mindestens einem Chlorierungsmittel,
- mit Wasser oder Wasservorläufern,
- mit einem Sauerstoffzusatz,
- mit einem Teil des aus A2 ausströmenden Gases, der zumindest in dem Waschabschnitt D gewaschen wird, zumindest in einem Trocknungsabschnitt E getrocknet wird, zumindest in einem Verdichter verdichtet wird,
- mit dem Teil des aus der Oxychlorierungszone ausströmenden Gases, der über das Gebläse zu der Oxychlorierungszone rückgeführt wurde.

9. Verfahren nach Anspruch 8, bei dem das Gas in der Kalzinierungszone aus folgender Mischung stammt:

- einem Trockenluftzusatz,
- mit einem Teil des aus dem Brennbett A2 ausströmenden Gases, der zumindest in dem Waschabschnitt D gewaschen wird, zumindest in einem Trocknungsabschnitt E getrocknet wird, zumindest in dem Verdichter verdichtet wird.

10. Verfahren nach einem der Ansprüche 8 oder 9, bei dem das aus der Oxychlorierungszone ausströmende Gas teilweise zumindest über den Waschabschnitt D, den Trocknungsabschnitt E und den Verdichter zum Eingang der Brennbetten A1 und A2 rückgeführt wird, und bei dem das aus der Oxychlorierungszone ausströmende Gas teilweise zum Brennbett A2 und zum Eingang der Oxychlorierungszone rückgeführt wird, wobei diese Rückführung über ein Gebläse erfolgt, ohne den Trocknungsabschnitt, den Waschabschnitt und den Verdichter zu passieren.

11. Verfahren nach Anspruch 10, bei dem die einzigen Sauerstoffzusätze sind:

- am Eingang des Bettes A2,
- am Eingang der Oxychlorierungszone,
- am Eingang der Kalzinierungszone.

12. Verfahren nach Anspruch 10, bei dem der einzige Sauerstoffzusatz von einem Trockenluftzusatz in der Kalzinierungszone stammt.

13. Vorrichtung für den Einsatz des Verfahrens nach einem der Ansprüche 1 bis 12, umfassend einen Raum, umfassend eine Verbrennungszone A, umfassend zwei Brennbetten (A1) und (A2) in Serie, mindestens eine Oxychlorierungszone (B), umfassend mindestens 1 Oxychlorierungsbett, und mindestens eine Kalzinierungszone (C), umfassend ein Kalzinierungsbett, wobei die Vorrichtung Mittel für die Zirkulation des Katalysators nacheinander durch die 2 Brennbetten, die Oxychlorierungszone und die Kalzinierungszone, wobei die Vorrichtung einen Punkt zur Entnahme eines Teils des Gases aus der Oxychlorierungszone umfasst, wobei das Entnahmemittel mit einem Gebläse verbunden ist, wobei das Gebläse stromabwärts einerseits mit mindestens einer ersten Rückführungsleitung eines Teils der Gase zum letzten Brennbett A2 und mindestens einer zweiten Rückführungsleitung eines weiteren Teils der Gase zu einem Gaseinleitungspunkt in die Oxychlorierungszone verbunden ist, wobei sich dieser Einleitungspunkt unter dem Entnahmepunkt der Oxychlorierungszone befindet, wobei diese zweite Rückführungsleitung mindestens einen Einleitungspunkt von Wasser oder Wasservorläufern, mindestens einen Ofen und mindestens einen Einleitungspunkt von Chlorierungsmitteln umfasst,
wobei die zweite Rückführungsleitung stromaufwärts zu dem Gebläse einen Gasentnahmepunkt umfasst, um einen Teil der Gase über einen Waschabschnitt D rückzuführen, wobei das aus dem Waschabschnitt ausströmende Gas teilweise gereinigt wird, bevor es über einen Verdichter zirkuliert, wobei die aus dem Verdichter ausströmenden Gase teilweise zumindest zu den Brennbetten A1 und A2 rückgeführt werden,
wobei die Vorrichtung ein Mittel zur Entnahme eines Teils des Gases an einem ersten Punkt des letzten Brennbetts A1 umfasst, wobei das Entnahmemittel zumindest mit dem Waschabschnitt verbunden ist,
wobei die Vorrichtung eine Platte oder jedes andere Mittel umfasst, um die Verbrennungszone und die Oxychlorierungszone zu trennen, um das Vermischen der Aus der Verbrennung stammenden Gase und der aus der Oxychlorierung stammenden Gase zu vermeiden.

14. Vorrichtung nach Anspruch 13, bei der die zweite Rückführungsleitung stromaufwärts zu dem Gebläse einen Gasentnahmepunkt umfasst, um einen Teil der Gase über einen Waschabschnitt D rückzuführen, wobei das aus dem Waschabschnitt ausströmende Gas teilweise gereinigt wird, um über einen Waschabschnitt E, dann über einen Verdichter zu zirkulieren, wobei die aus dem Verdichter ausströmenden Gase teilweise zumindest zu den Brennbetten A1 und A2 und teilweise zu der Oxychlorierungszone und der Kalzinierungszone rückgeführt werden.

**Claims**

1. A process for regenerating a catalyst for the production of aromatic hydrocarbons or for reforming, comprising the following steps:

    • a step a) for combustion in a combustion zone A comprising at least two combustion beds A1 and A2 in series;
    • a step b) for oxychlorination in an oxychlorination zone B comprising at least one oxychlorination bed, said oxychlorination zone B being supplied with at least one chlorinating agent, at least with water or water precursors and at least with an oxygen-containing gas; the combustion zone and the oxychloration zone being separated so as to prevent the gas deriving from the combustion and the gas deriving from the oxychloration from mixing,
    • a step c) for calcining in a calcining zone C comprising at least one calcining bed supplied with a gas comprising at least a makeup of dry air;

    in which:

    • said catalyst comprises a support, chlorine and at least one noble metal and moves in series in beds A1 then A2, then in the oxychlorination zone B then in the calcining zone C;
    • the effluent gas from bed A1 is sent to bed A2;
    • the gas supplying the calcining zone C moves freely to the oxychlorination zone B;
    • a makeup of oxygen-containing gas is made at least to the inlet to the calcining zone;
    • the effluent gas from the oxychlorination zone is recycled via at least one scrubbing section D towards the inlet to combustion beds A1 and A2;
    • the effluent gas from the oxychlorination zone is recycled, passing via a blower, without passing through said scrubbing section D, at least in part to the combustion bed A2 and at least in part to the inlet of the oxychlorination zone B;
    • the effluent gas from combustion bed A2 is recycled via at least said scrubbing section D to the inlet of beds A1 and A2.

2. A process according to claim 1, in which in oxychlorination zone B, the temperature is in the range 350°C to 600°C and the residence time for the catalyst is in the range 30 minutes to 3 hours.

3. A process according to claim 2, in which in oxychlorination zone B, the quantity of oxygen in the gas in contact with the catalyst is in the range 4% to 21% by volume.

4. A process according to claim 3, in which in the calcining zone C, the gas comprises at most 21% by volume of oxygen and at most 1% by volume of water.

5. A process according to one of the preceding claims, in which the only makeup of oxygen-containing gas is made to the inlet of the calcining zone.

6. A process according to one of the preceding claims, in which the chlorinating agent is chlorine.

7. A process according to one of claims 1 to 6, in which the catalyst is in a moving bed in each of zones A, B and C.

8. A process according to claim 7, in which the gas in the oxychlorination zone results from mixing:

    • gas deriving from the calcining zone C;
    • with at least one chlorinating agent;
    • with water or water precursors;
    • with a makeup of oxygen;
    • with a portion of the effluent gas from A2 which is at least scrubbed in scrubbing section D, at least dried in drying section E, and at least compressed in a compressor;

• with the portion of the effluent from the oxychlorination zone recycled via the blower to said oxychlorination zone.

9. A process according to claim 8, in which the gas in the calcining zone derives from mixing:

  • a makeup of dry air;
  • with a portion of the effluent gas from the combustion bed A2 which is at least scrubbed in the scrubbing section D, at least dried in the drying section E, and at least compressed in said compressor.

10. A process according to claim 8 or claim 9, in which a portion of the effluent gas from the oxychlorination zone is recycled via at least the scrubbing section D, the drying section E and the compressor to the inlet to the combustion beds A1 and A2 and in which a portion of the effluent gas from the oxychlorination zone is recycled to the combustion bed A2 and to the inlet of the oxychlorination zone, said recycle being carried out via a blower without passing via said drying section, via said scrubbing section and via said compressor.

11. A process according to claim 10, in which the only oxygen makeups are:

  • at the inlet to the bed A2;
  • at the inlet of the oxychlorination zone;
  • at the inlet of the calcining zone.

12. A process according to claim 10, in which the only makeup of oxygen derives from a makeup of dry air to the calcining zone.

13. A device for carrying out the process according to one of claims 1 to 12, comprising a combustion zone A comprising two combustion beds (A1) and (A2) in series, at least one oxychlorination zone (B) comprising at least one oxychlorination bed and at least one calcining zone (C) comprising a calcining bed, said device comprising means for circulating catalyst in succession through the two combustion beds, the oxychlorination zone and the calcining zone, said device comprising a point for withdrawing a portion of the gas from the oxychlorination zone, said withdrawal means being connected to a blower, said blower being connected downstream to at least a portion of a first line for recycling a portion of the gas to the last combustion bed (A2) and at least one second line for recycling another portion of the gas to a point for introducing gas into the oxychlorination zone, said introduction point being located below the point for withdrawal from the oxychlorination zone, said second recycling line comprising at least one point for introducing water or water precursors, at least one furnace and at least one point for introducing chlorinating agents, said second recycling line comprising, upstream of the blower, a point for withdrawing gas in order to recirculate a portion of the gas via a scrubbing section D, the effluent from the scrubbing section being purged in part before being moved via a compressor, the effluent gases from the compressor being partly recycled at least to the combustion beds A1 and A2, said device comprising a means for withdrawing a portion of the gas at a first point of the last combustion bed A2, said withdrawal means being connected to at least the scrubbing section, said device comprising a plate or any other means for separating the combustion zone and the oxychlorination zone to prevent gases from the combustion zone from mixing with the gases from the oxychlorination zone.

14. A device according to claim 13, in which said second recycling line comprises, upstream of the blower, a point for withdrawing gas in order to recirculate a portion of the gas via a scrubbing section D, the effluent from the scrubbing section being purged before being moved, via a drying section E then via a compressor, the effluent gases from the compressor being in part recycled at least to the combustion beds A1 and A2 and in part to the oxychlorination zone and to the calcining zone.

Figure 1

EP 2 205 699 B1

Figure 2

EP 2 205 699 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0378482 A
- EP 0872276 B
- EP 0872277 B

**Littérature non-brevet citée dans la description**

- CRC Handbook of Chemistry and Physics. 2000